Europäisches Patentamt

(19) European Patent Office

Office européen des brevets

(11) Veröffentlichungsnummer: **0 091 396**
**B1**

(12) **EUROPÄISCHE PATENTSCHRIFT**

(45) Veröffentlichungstag der Patentschrift:
**27.08.86**

(21) Anmeldenummer: **83730032.6**

(22) Anmeldetag: **22.03.83**

(51) Int. Cl.⁴: **G 01 L 13/02, G 01 L 9/12**

(54) **Druck- oder Druckdifferenz-Messumformer.**

(30) Priorität: **06.04.82 DE 3213320**

(43) Veröffentlichungstag der Anmeldung:
**12.10.83 Patentblatt 83/41**

(45) Bekanntmachung des Hinweises auf die Patenterteilung:
**27.08.86 Patentblatt 86/35**

(84) Benannte Vertragsstaaten:
**DE FR GB**

(56) Entgegenhaltungen:
**DE - A - 2 360 276**
**DE - A - 2 631 025**
**US - A - 3 195 028**

(73) Patentinhaber: **Siemens Aktiengesellschaft Berlin und München, Wittelsbacherplatz 2, D-8000 München 2 (DE)**

(72) Erfinder: **Ziegler, Klaus, Hasselfelder Weg 2, D-1000 Berlin 45 (DE)**

## Beschreibung

Die Erfindung bezieht sich auf einen Druck- oder Druckdifferenz-Messumformer mit einem Membranspanngehäuse, in dem eine Messmembran zwischen zwei festen Kondensatorplatten eingespannt ist, mit einem Druckgehäuse, in dem mittels eines ringförmigen, in Radialrichtung elastischen Tragelementes das Membranspanngehäuse gehalten ist, und mit Trennmembranen, die sich bei Überlast gegen entsprechend ausgebildete Formbetten des Druckgehäuses legen.

Bei einem bekannten Messumformer dieser Art (Siemens-Druckschrift «TELEPERM Messumformer K", Bestell-Nummer E 682/1023) besteht das Tragelement aus einer ringförmigen Membran, die einerseits dicht mit dem Membranspanngehäuse an dessen äusseren Umfang verbunden und andererseits im Druckgehäuse eingespannt ist. Auf diese Weise ist das Membranspanngehäuse im Druckgehäuse schwimmend aufgehängt. Diese Aufhängung hat den Vorteil, dass die Federsteifigkeit der Messmembran durch den statischen Druck des Messmediums nicht beeinflusst ist. Messfehler infolge von Änderungen des statischen Druckes treten bei diesem bekannten Messumformer daher nicht auf. Durch die schwimmende Aufhängung des Membranspanngehäuses ergibt sich bei dem bekannten Messumformer der weitere Vorteil, dass im Überlastfalle Überdehnungen der Messmembran nicht auftreten können, da der Messmembran das elastische Tragelement parallel geschaltet ist; dieses Tragelement nimmt im wesentlichen das Flüssigkeitsvolumen auf, das bei einseitiger starker Überlastung des Messumformers unter der betroffenen Trennmembran herausgepresst wird. Nullpunktsfehler infolge Überdehnungen der Messmembran sind also bei dem bekannten Messumformer vermieden.

Der Erfindung liegt die Aufgabe zugrunde, einen Druck- oder Druckdifferenz-Messumformer zu schaffen, der sich unter Beibehaltung der Vorteile des bekannten Messumformers durch einen vergleichsweise kompakten Aufbau auszeichnet und der erheblich kostengünstiger herstellbar ist.

Zur Lösung dieser Aufgabe ist bei einem Druck- oder Druckdifferenz-Messumformer der eingangs angegebenen Art erfindungsgemäss das Tragelement rohrartig ausgebildet und unter Erziehung einer in Achsparallelrichtung steifen Verbindung von Druck- und Membranspanngehäuse mit diesen verbunden.

Ein wesentlicher Vorteil des erfindungsgemässen Messumformers besteht darin, dass bei ihm das Membranspanngehäuse trotz seiner schwimmenden Lagerung infolge der hohen Steifigkeit des Tragelementes in Achsparallelrichtung in axialer Richtung keine Bewegungen ausführt, so dass zu beiden Seiten des Membranspanngehäuses grössere Spalten entfallen können, die bei dem bekannten Messumformer erforderlich sind. Das Flüssigkeitsvolumen innerhalb des Druckgehäuses ist bei dem erfindungsgemässen Messumformer daher erheblich kleiner als bei dem bekannten Messumformer. Bei dem erfindungsgemässen Messumformer lässt sich demzufolge erreichen, dass die Flüssigkeitsmengen unter den Trennmembranen das maximale Schluckvolumen der Messmembran auch bei maximaler Betriebstemperatur und kleinstem statischem Druck nicht voll erreichen; die Füllmengen sind so gross gewählt, dass die Trennmembranen bei niedrigster Betriebstemperatur und maximalem Druck bei Vollaussteuerung die Formbetten nicht berühren. Auch bei Überlast wird daher die Messmembran nicht überdehnt. Bei dem erfindungsgemässen Messumformer sind daher nicht nur schädliche Einflüsse auf die Messmembran im Überlastfalle verhindert, sondern es ist auch sichergestellt, dass infolge des in Radialrichtung elastischen Tragelementes Dehnungen des Druckgehäuses bei Änderungen des statischen Druckes keinen Einfluss auf die Messmembran und auf das Messverhalten haben. Ein weiterer Vorteil des erfindungsgemässen Messumformers besteht in seiner vergleichsweise kleinen Bauform. Diese ist vor allem darauf zurückzuführen, dass der erfindungsgemässe Messumformer vergleichsweise kleine Flüssigkeitsräume aufweist. Dementsprechend können die Trennmembranen relativ klein ausgelegt sein, was zu der kleinen Bauform des erfindungsgemässen Messumformers wesentlich beiträgt.

Bei dem erfindungsgemässen Messumformer kann das Tragelement in unterschiedlicher Weise ausgebildet sein, beispielsweise kann es aus zwei konzentrisch angeordneten, dünnwandigen Rohrteilen bestehen, die an ihrer einen Seite miteinander und an ihrer jeweils anderen Seite einerseits mit dem Druckgehäuse und andererseits mit dem Membranspanngehäuse verbunden sind. Als besonders vorteilhaft wird es angesehen, wenn das Tragelement ein dünnwandiges Rohr ist, das an seinem einen Ende fest mit dem Druckgehäuse und an seinem anderen Ende fest mit dem Membranspanngehäuse verbunden ist. Ein Vorteil der Verwendung eines solchen Tragelementes besteht darin, dass es eine hohe Steifigkeit in Achsparallelrichtung sicherstellt. Ein weiterer Vorteil wird darin gesehen, dass es in Radialrichtung nur einen geringen Raumbedarf hat, wodurch die Verwendung eines solchen Tragelementes in besonderer Weise zur Gewinnung eines Messumformers mit besonders kleiner Raumform und kleinem Füllvolumen beiträgt.

Bei einer Ausführungsform des erfindungsgemässen Messumformers mit einem dünnwandigen Rohr als Tragelement besteht das Druckgehäuse vorteilhafterweise aus einem der Länge des dünnwandigen Rohres entsprechenden Zentralkörper und zwei kappenartigen Seitenteilen zur Aufnahme druckfester Durchführungen für Anschlussleitungen der Kondensatorplatten, zur Bildung der Formbetten und zur Befestigung der Trennmembranen. Bei einem derartig ausgebildeten Druckgehäuse lässt sich das dünnwandige Rohr in besonders einfacher Weise sowohl mit ihm als auch mit dem Membranspanngehäuse verbinden, das vorteilhafterweise in seiner Breite der des Druckgehäuses entspricht.

Um einerseits verhältnismässig einfach zu fertigende Seitenteile des Druckgehäuses verwenden zu können und um andererseits möglichst kleine Füllflüssigkeitsräume im erfindungsgemässen Messumformer zu erhalten, befinden sich in den Innenräumen zwischen dem Membranspanngehäuse und den Seitenteilen vorteilhafterweise Füllkörper mit sehr geringer Wärmedehnung, die beispielsweise aus Keramik oder Invar-Legierungen bestehen können. Diese Füllkörper haben im Zusammenwirken mit den grössere Wärmedehnungen aufweisenden Druckgehäuse die Aufgabe, die bei Temperaturänderungen sich ergebenden Änderungen des Füllflüssigkeitsvolumens aufzunehmen.

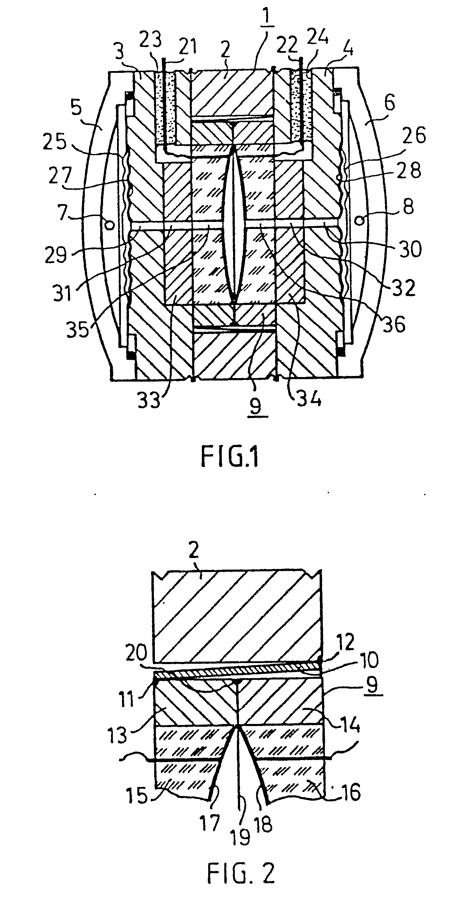

Zur Erläuterung der Erfindung ist in Fig. 1 ein Ausführungsbeispiel des erfindungsgemässen Druck- oder Druckdifferenzmessumformers im Schnitt und in Fig. 2 eine vergrösserte Einzelheit des Ausführungsbeispiels nach Fig. 1 wiedergegeben.

Der Druck- oder Druckdifferenzmessumformer nach Fig. 1 enthält ein Druckgehäuse 1, das aus einem Zentralkörper 2 und kappenartigen Seitenteilen 3 und 4 besteht. Beide Seitenteile 3 und 4 sind mittels Gehäusekappen 5 und 6 abgeschlossen, die mit Öffnungen 7 und 8 versehen sind. Über die Öffnungen 7 und 8 wird der Messumformer mit einer zu messenden Druckdifferenz beaufschlagt.

Innerhalb des Druckgehäuses 1 ist ein Membranspanngehäuse 9 gehalten, indem es über ein dünnwandiges Rohr 10 (vgl. auch Fig. 2) an dem Zentralkörper 2 befestigt ist. Das dünnwandige Rohr 10 ist zu diesem Zweck mit seinem einen Ende 11 am Membranspanngehäuse 9 und mit seinem anderen Ende 12 am Zentralkörper 2 des Druckgehäuses 1 dichtend befestigt, im vorliegenden Falle verschweisst. Das Membranspanngehäuse 9 enthält zwei äussere Ringteile 13 und 14 aus Metall sowie zwei Isolatorteile 15 und 16, die feststehende Kondensatorplatten 17 und 18 tragen. Zwischen den äusseren Ringteilen 13 und 14 ist eine Messmembran 19 eingespannt; die Messmembran 19 ist mit den ringförmigen Teilen 13 und 14 an der Stelle 20 verschweisst.

Zuleitungen 21 und 22 sind in druckfesten Durchführungen 23 und 24 im Druckgehäuse 1 von aussen nach innen zu den feststehenden Kondensatorplatten 17 und 18 geführt. Auf diese Weise kann die Änderung der Kapazität zwischen der Messmembran 19 und den jeweils feststehenden Kondensatorplatten 17 und 18 erfasst und in einer nicht dargestellten Auswerteeinrichtung zur Gewinnung einer elektrischen Grösse verwendet werden, die der jeweiligen Druckdifferenz proportional ist.

Die kappenartigen Seitenteile 3 und 4 sind jeweils mit einer Trennmembran 25 bzw. 26 versehen, denen als Formbetten 27 und 28 ausgebildete Seitenflächen der kappenartigen Seitenteile 3 und 4 gegenüberliegen. Jedes kappenartige Seitenteil 3 bzw. 4 ist ausserdem mit einer Durchgangsöffnung 29 bzw. 30 versehen. Diese Durchgangsöffnung 29 und 30 fluchten mit weiteren Durchgangslöchern 31 und 32 in Füllkörpern 33 und 34, die zwischen dem Membranspanngehäuse 9 und den kappenartigen Seitenteilen 3 und 4 angeordnet sind. Über Bohrungen 35 und 36 im Membranspanngehäuse 9 wird die Druckdifferenz auf die Messmembran 19 übertragen, die sich demzufolge entsprechend der Druckdifferenz in der einen oder anderen Richtung auslenkt.

Bei dem erfindungsgemässen Messumformer wird eine Änderung des statischen Druckes innerhalb des Druckgehäuses 1 von dem Membranspanngehäuse 9 ferngehalten, da die mit der Änderung des statischen Druckes einhergehende Ausdehnung des Druckgehäuses 1 in radialer Richtung durch das Tragelement bzw. dünnwandige Rohr 10 aufgenommen wird. Die Messmembran 19 bleibt von Änderungen des statischen Druckes daher unbeeinflusst, so dass sich ein Messfehler nicht einstellt. Im Überlastfalle legt sich entweder die Trennmembran 25 oder die Trennmembran 26 gegen das Formbett 27 bzw. 28, wodurch die jeweils unter ihr befindliche Füllflüssigkeit herausgepresst wird. Dabei ergibt sich jedoch keine Überdehnung der Messmembran 19, da das unter der jeweiligen Trennmembran herausgepresste Flüssigkeitsvolumen von der Messmembran 19 aufgenommen wird. Eine Überdehnung der Messmembran 19 ist damit vermieden, so dass sich auch Nullpunktsfehler infolge Überlastung nicht einstellen können.

## Patentansprüche

1. Druck- oder Druckdifferenz-Messumformer mit einem Membranspanngehäuse (9), in dem eine Messmembran (19) zwischen zwei festen Kondensatorplatten (17, 18) eingespannt ist, mit einem Druckgehäuse (1), in dem mittels eines ringförmigen, in Radialrichtung elastischen Tragelementes (10) das Membranspanngehäuse (9) gehalten ist, und mit Trennmembranen (25, 26), die sich bei Überlast gegen entsprechend ausgebildete Formbetten (27, 28) des Druckgehäuses (1) legen, dadurch gekennzeichnet, dass das Tragelement (10) rohrartig ausgebildet ist und unter Erzielung einer in Achsparallelrichtung steifen Verbindung von Druck- (1) und Membranspanngehäuse (9) mit diesen verbunden ist.

2. Messumformer nach Anspruch 1, dadurch gekennzeichnet, dass das Tragelement ein dünnwandiges Rohr (10) ist, das an seinem einen Ende (11) fest mit dem Membranspanngehäuse (9) und an seinem anderen Ende (12) fest mit dem Druckgehäuse (1) verbunden ist.

3. Messumformer nach Anspruch 2, dadurch gekennzeichnet, dass das Druckgehäuse (1) aus einem der Länge des dünnwandigen Rohres (10) entsprechenden Zentralkörper (2) und zwei kappenartigen Seitenteilen (3, 4) zur Aufnahme druckfester Durchführungen (23, 24) für Anschlussleitungen (21, 22) der Kondensatorplatte (17, 18), zur Bildung der Formbetten (27, 28) und zur Befestigung der Trennmembranen (25, 26) besteht.

4. Messumformer nach Anspruch 3, dadurch gekennzeichnet, dass sich in den Innenräumen zwischen dem Membranspanngehäuse (9) und den Seitenteilen (3, 4) des Druckgehäuses (1) Füllkörper (33, 34) mit im Vergleich zum Druckgehäuse (1) sehr geringer Wärmedehnung befinden.

## Claims

1. Pressure or pressure difference measuring transducer comprising a diaphragm-clamping housing (9), in which a measuring diaphragm (19) is clamped between two fixed capacitor plates (17, 18), a pressure housing (1) in which the diaphragm-clamping housing (9) is held by means of a radially-elastic annular support element (10) and isolating diaphragms (25, 26) which, in the event of an overload, abut against correspondingly shaped mould beds (27, 28) of the pressure housing (1), characterised in that the support element (10) is tubular and by establishing a connection which is rigid in the axial direction between the pressure housing (1) and the diaphragm-clamping housing (9), is connected to these housings.

2. A measuring transducer as claimed in Claim 1, characterised in that the support element is a thinwalled tube (10) which at its one end (11) is firmly connected to the diaphragm-clamping housing (9) and at its other end (12) is firmly connected to the pressure housing (1).

3. A measuring transducer as claimed in Claim 2, characterised in that the pressure housing (1) consists of a central body (2), which corresponds to the length of the thin-walled tube (10), and two cap-shaped side parts (3, 4) serving for accommodating pressure-resistant ducts (23, 24) for connecting leads (21, 22) for the capacitor plates (17, 18), for forming the mould beds (27, 28) and for securing the isolating diaphragms (25, 26).

4. A measuring transducer as claimed in Claim 3, characterised in that fillers (33, 34) having a very low thermal expansion compared with the pressure housing (1), are arranged in the internal spaces between the diaphragm-clamping housing (9) and the side parts (3, 4) of the pressure housing (1).

## Revendications

1. Transducteur de mesure de pression ou de différende pression comportant un boîtier (9) de serrage d'une membrane, dans lequel une membrane de mesure (9) est tendue entre deux plaques fixes (17, 18) d'un condensateur, et un récipient de pression (1) dans lequel le boîtier (9) de serrage de la membrane est maintenu au moyen d'un organe annulaire de support (10), élastique suivant la direction radiale, et des membranes de séparation (25, 26) qui s'appliquent, dans le cas d'une surcharge, contre des appuis conformés (27, 28) de configuration correspondante du récipient de pression (1), caractérisé par le fait que l'organe de support (10) est réalisé avec une forme tubulaire et est relié au boîtier (9) de serrage de la membrane, moyennant l'établissement d'une liaison, rigide suivant la direction parallèle à l'axe, entre le récipient de pression (1) et le boîtier (9) de serrage de la membrane.

2. Transducteur de mesure suivant la revendication 1, caractérisé par le fait que l'organe de support est un tube (10) à paroi mince qui, au niveau de l'une de ses extrémités (11), est relié rigidement au boîtier (9) de serrage de la membrane et sur son autre extrémité (12), est relié rigidement au récipient de pression (1).

3. Transducteur de mesure suivant la revendication 2, caractérisé par le fait que le récipient de pression (1) est constitué par un corps central (2) correspondant à la longueur du tube à paroi mince (10) et par deux éléments latéraux (3, 4) en forme de chapeaux qui servent à loger des traversées (23, 24), résistantes à la pression, pour des conducteurs de raccordement (21, 22) des plaques (17, 18) du condensateur, et qui sont utilisées pour la formation des appuis conformés (27, 28) et pour la fixation d'une membrane de séparation (25, 26).

4. Transducteur de mesure suivant la revendication 3, caractérisé par le fait que des corps de remplissage (33, 34) présentant une dilatation thermique très faible par rapport au récipient de pression (1) sont situés dans les espaces intérieurs compris entre le boîtier (9) de serrage de la membrane et les éléments latéraux (3, 4) du récipient de pression (1).

FIG.1

FIG. 2